# EUROPÄISCHE PATENTSCHRIFT

(11) **EP 0 326 652 B1**
(45) Veröffentlichungstag und Bekanntmachung des Hinweises auf die Patenterteilung: **11.08.1993**
(21) Anmeldenummer: 88116969.2
(22) Anmeldetag: 12.10.1988
(51) Int. Cl.: B09B 3/00, B65B 1/00

(54) **Mobile Vorrichtung zum Verpacken von insbesondere hochtoxischem Abfall**
Mobile device for packaging highly toxic waste, especially
Dispositif mobile pour l'emballage, en particulier de déchets fortement toxiques

(30) Priorität: 05.02.1988 DE 3803520
(43) Veröffentlichungstag der Anmeldung: 09.08.1989
(73) Patentinhaber: KOMMANDITGESELLSCHAFT, AVG TECHNICAL SERVICES GMBH + CO., D-20457 Hamburg (DE)
(72) Erfinder: Dirrigl, Hans Albert, D-2150 Buxtehude (DE)
(74) Vertreter: Leyh, Hans, Dr.-Ing.

(56) Entgegenhaltungen:
- CA-A- 1 007 615
- DE-A- 2 402 572
- DE-U- 8 801 473
- FR-A- 2 398 666
- GB-A- 1 603 729
- US-A- 3 583 164
- US-A- 3 861 117
- US-A- 4 121 399

## Beschreibung

Die Erfindung betrifft eine mobile Vorrichtung zur Handhabung von Abfall für den Transport gemäß Oberbegriff von Anspruch 1.

Aus FR-A-23 98 666 ist eine mobile Vorrichtung zur Handhabung von Massengütern bekannt, welche einen Wagen, auf dem ein Einfülltrichter für das Massengut montiert ist und unter denselben leere Verpackungsbehälter zugeführt werden, eine Einrichtung auf der Ladefläche des Wagens für die Abführung der gefüllten Verpackungsbehälter und eine auf dem Wagen angeordnete Einrichtung zum Verschließen der gefüllten Verpackungsbehälter umfaßt. Da hierbei an allen Stellen, an denen Personen in Berührung mit dem Abfall kommen, Sicherheits- und Schutzvorschriften eingehalten werden müssen, gestaltet sich die Handhabung zeitraubend und aufwendig.

Bei der Beseitigung von hochtoxischem Abfall beispielsweise ist es bisher üblich, das Abfallmaterial am Ort des Entstehens auf ein Fahrzeug zu verladen und dann zum Ort der Beseitigung zu bringen, z.B. zu einer Verbrennungsanlage, wo das Abfallmaterial aus dem Fahrzeug entladen und in einen Verbrennungsofen eingeführt wird.

Bei dieser Arbeitsweise ist es unbedingt erforderlich bzw. durch staatliche Richtlinien vorgeschrieben, sowohl bei der Aufnahme des Abfalles, d.h. z.B. beim Beladen des Fahrzeuges, als auch bei der Abgabe des Abfalles, z.B. beim Entladen des Fahrzeuges und Eingeben des Abfalles in einen Verbrennungsofen, unter Vollschutz zu arbeiten, was bedeutet, daß eine ganze Reihe von amtlichen Sicherheitsvorschriften eingehalten werden muß.

Infolge dieser von sämtlichen mit dem Abfall in Berührung kommenden Personen einzuhaltenden Sicherheits- und Schutzvorschriften wird die Handhabung und der Transport des toxischen Abfalls hinsichtlich Zeit und der zu treffenden Schutzmaßnahmen sehr aufwendig.

Der Erfindung liegt daher die Aufgabe zugrunde, eine Vorrichtung der eingangs genannten Art derart zu gestalten, daß die Schutzmaßnahmen bei der Handhabung des toxischen Abfalles reduziert werden können. Vorzugsweise soll hierbei auch der Zeitaufwand reduziert werden.

Nach der Erfindung wird dies mit einer mobilen Vorrichtung zur Handhabung von Abfall erreicht, welche im Patentanspruch 1 angegeben ist.

Die erfindungsgemäße mobile Vorrichtung ermöglicht es, den Wagen mit den Einrichtungen zum Abpacken des toxischen Materials jeweils zu dem Ort zu bringen, an dem das toxische Material anfällt. Dort wird es an Ort und Stelle verpackt unter Beachtung der erforderlichen Sicherheits- und Schutzmaßnahmen. Das abgepackte toxische Material wird dann auf normalen Lastkraftwagen zum Ort der Beseitigung, d.h. zu einer Verbrennungsanlage gefahren, an welcher es zusammen mit den Verpackungsbehältern direkt in den Verbrennungsofen eingegeben werden kann.

Beim Transport der gefüllten und verschlossenen Verpackungsbehälter, beim Entladen der Lastkraftwagen und beim Einfüllen der Verpackungsbehälter in den Verbrennungsofen braucht dann nicht mehr unter sogenanntem Vollschutz gearbeitet zu werden, d.h. die für den Vollschutz vorgeschriebenen strengeren Sicherheits- und Schutzmaßnahmen sind bei diesen Arbeitsgängen nicht mehr erforderlich.

Die erfindungsgemäße mobile Vorrichtung kann hingegen, sobald sie ihre Tätigkeit an einem Ort beendet hat, zum nächsten Ort oder zur nächsten Firma gefahren werden, bei der toxischer oder hochtoxischer Abfall anfällt und für die Beseitigung abzuholen ist.

Für die Zufuhr und Abfuhr der Verpackungsbehälter sind auf der Ladefläche des Wagens Rollenbahnen angebracht, die es ermöglichen, die Behälter zunächst unter den Einfülltrichter zu bringen und nach dem Befüllen von diesem weg zu transportieren. Der Abfülltrichter ist hierbei an seinem unteren Ende mit einer vertikalen, rahmenförmigen aus- und einfahrbaren Schürze versehen, die vor dem Befüllen des jeweiligen Verpackungsbehälters zeitweilig in diesen eintaucht, um die Wände des leteren beim Einfüllen des Abfallmaterials zu schützen.

Im Einfülltrichter selbst ist vorzugsweise eine Zerkleinerungseinrichtung für das Abfallmaterial eingebaut.

Der Einfülltrichter ist ferner vorzugsweise im Bereich seines unteren Endes mit einer Einrichtung zum Einpressen oder Zusammendrücken des eingefüllten Abfallmaterials in den jeweiligen Verpackungsbehälter versehen.

Diese Einrichtung kann aus einer Klappe bestehen, die um eine horizontale Achse schwenkbar und gegen das eingefüllte Abfallmaterial andrückbar ist.

Die Klappe kann hierbei vorteilhaft durch einen Wandabschnitt des unteren Endes des Einfülltrichters gebildet sein.

Die erfindungsgemäße Vorrichtung ist insbesondere zur Verwendung beider Handhabung von hochtoxischem Abfall für den Transport zu einer Verbrennungsaulage bestimmt.

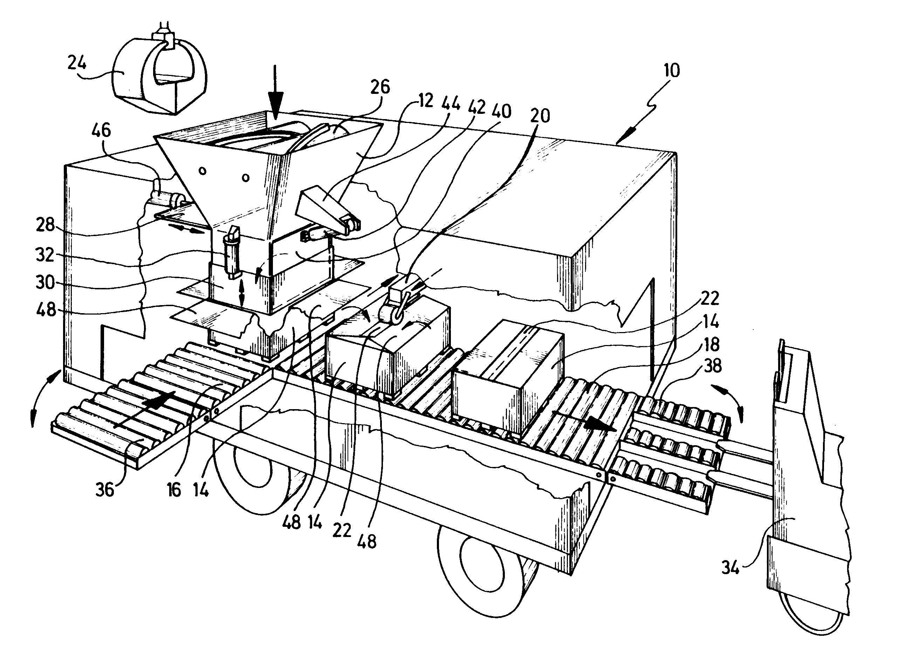

Eine beispielsweise Ausführungsform der Erfindung wird nachstehend anhand der einzigen Figur der Zeichnung erläutert, die schematisch eine Schrägansicht der erfindungsgemäßen mobilen Vorrichtung zeigt.

Auf einem Wagen 10 ist ein Einfülltrichter 12 derart montiert, daß das abzupackende Abfallmaterial von oben in den Trichter 12 eingefüllt werden kann.

Unterhalb des Trichters 12 ist ein geöffneter Verpackungsbehälter 14 angeordnet, der über eine Rollenbahn 16 in seine Position unter dem Trichter 12 zugeführt und über eine Rollenbahn 18 aus dieser Position unterhalb des Trichters 12 wieder abgeführt werden kann. Die beiden Rollenbahnen 16 und 18 können, wie dargestellt, rechtwinklig zueinander verlaufen und sie sind auf der Ladefläche bzw. dem Boden des Wagens 10 befestigt.

Ein Teil 36 der Rollenbahn 16 ragt über den Wagen 10 hinaus und er kann nach Beendigung der Arbeit nach oben und innen umgeklappt werden. Ebenso ragt ein Teil 38 der Rollenbahn 18 über den Wagen 10 hinaus und dieser Teil 38 kann ebenfalls nach Beendigung der der Arbeit nach oben und innen umgeklappt werden.

Nachdem der gefüllte Verpackungsbehälter 14 den Trichter 12 verlassen hat und sich auf der Rollenbahn 18 befindet, werden mit Hilfe einer Verschließeinrichtung 20 die Deckelabschnitte 48 des Verpackungsbehälters 14 zusammengefaltet und der Behälter z.B. durch ein Klebeband 22 verschlossen.

Das Zusammenfalten der Deckelabschnitte 48 und das Verschließen des Verpackungsbehälters durch das Klebeband 22 erfolgt mit Hilfe einer nur schematisch angedeuteten, handelsüblichen Verschließeinrichtung 20.

Mit Hilfe eines Gabelstaplers oder Hubwagens 34 werden dann die verschlossenen Verpackungsbehälter 14 vom Wagen 10 abgenommen und mit Hilfe eines nicht dargestellten Kraftfahrzeuges z.B. zu einer Verbrennungsanlage geführt.

Die erfindungsgemäße Vorrichtung arbeitet folgendermaßen. Mit Hilfe eines üblichen Greifers 24 wird das abzupackende, insbesondere hochtoxische Abfallmaterial aufgenommen und von oben her in den Trichter 12 eingefüllt.

Der Trichter 12 ist mit einem Boden 28 versehen, der in der Zeichnung ausgefahren ist. Der Boden 28 wird jedoch vor dem Einfüllen des Abfallmaterials mit Hilfe von z.B. eines Kolben-Zylinder-Aggregates 46 eingefahren, derart, daß er den Trichter 12 am unteren Ende des trichterförmigen Abschnittes schließt, so daß das Abfallmaterial zunächst nicht nach unten durchfallen kann.

Der Boden 28 ist nicht in allen Fällen erforderlich, es kann auch vorgesehen werden, daß das Abfallmaterial in den Trichter 12 eingefüllt wird und direkt nach unten in den geöffneten Verpackungsbehälter durchfällt.

In der dargestellten Ausführungsform ist im Trichter 12 eine Zerkleinerungseinrichtung 26 eingebaut, die das in den Trichter eingefüllte Abfallmaterial auf gewünschte Größe zerkleinert.

Vor dem Einfüllen des Abfallmaterials in den Trichter 12 wird unter dem unteren Ende des Trichters ein geöffneter Verpackungsbehälter 14 angeordnet, der über die Rollenbahn 36, 16 hereingeschoben werden kann. Der Verpackungsbehälter kann beispielsweise aus einem steifen Karton bestehen, in den ein zusätzlicher Boden z.B. in Form einer Holzplatte oder einer Kunststoffplatte zur Versteifung eingelegt sein kann.

Der Trichter 12 ist an seinem unteren Ende mit einer rahmenförmigen Schürze 30 versehen, die der Form der Öffnung des Verpackungsbehälters 14 angepaßt ist und deren vertikale Höhe wenigstens gleich der vertikalen Höhe des Verpackungsbehälters ist.

Die Schürze 30 ist in vertikaler Richtung relativ zum Trichter 12 mittels geeigneter Koben-Zylinder-Aggregate 32 aus- und einfahrbar.

Ehe das Abfallmaterial aus dem Trichter 12 in den Verpackungsbehälter 14 fällt oder eingefüllt wird, wird die Schürze 30 nach unten ausgefahren, wobei sie praktisch bis zum Boden des Verpackungsbehälters in diesen eintaucht.

Die Schürze dient dazu, die Wände des Verpackungsbehälters beim Einfüllen des Abfallmaterials zu schützen. Das Abfallmaterial kann, wenn der Boden 28 des Trichters 12 ausgefahren ist, sukzessive nach unten in den Verpackungsbehälter fallen, so wie es von der Zerkleinerungseinrichtung 26 zerkleinert wird. Der Boden 28 kann aber auch eingefahren werden und den Trichter 12 an seinem unteren Ende abschließen, solange, bis eine Füllung an zerkleinertem Abfallmaterial vorliegt, worauf der Boden 12 in die in der Figur dargestellte Position ausgefahren wird, worauf das zerkleinerte Abfallmaterial auf einmal in den Verpackungsbehälter 14 fällt.

Um das in den Verpackungsbehälter locker eingefüllte Abfallmaterial zusammenzupressen oder wenigstens die Spitze des Schüttkegels zusammen zudrücken, ist zweckmäßigerweise eine Wand 40 des unteren rechteckigen Endes des Trichters 12 um die eine horizontale Achse, die zweckmäßigerweise am unteren Ende der Wand 40 liegt, schwenkbar.

Diese Wand 40 wird dann nach dem Ende der Befüllung des Verpackungsbehälters mit Hilfe eines Kolben-Zylinder-Aggregates 42, dessen eines Ende an einer ortsfesten Konsole 44 des Trichters 12 angelenkt ist, einwärts geschwenkt, wodurch mit Hilfe dieser Wand oder Klappe 40 der Schüttkegel des eingefüllten Abfallmaterials zusammengedrückt und das letztere in den Verpackungsbehälter 14 hineingedrückt wird.

Ist dies geschehen, so kehrt die Klappe 40 wieder in ihre vertikale Ausgangsposition zurück, die Schürze 30 wird mit Hilfe der Kolben-Zylinder-Aggregate 32 wieder in die in der Figur dargestellte Position hochgezogen und der Verpackungsbehälter wird aus seiner Position unterhalb des Trichters 12 längs der Rollenbahn 18 z.B. manuell verschoben, worauf er in den Bereich der Verschließeinrichtung 20 gelangt, durch die, wie bereits beschrieben, die Deckelabschnitte 48 des Verpackungsbehälters nach innen gefaltet werden, worauf der Verpackungsbehälter mit Hilfe eines Klebebandes 22 verschlossen wird.

Der verschlossene Verpackungsbehälter 14 wird, wie ebenfalls bereits oben erwähnt, mit Hilfe des Hubwagens 34 von der Rollenbahn 18 bzw. 38 abgenommen und beispielsweise zu einem Lastkraftwagen transportiert, der die Verpackungsbehälter zu einer Beseitigungsanlage, beispielsweise einer Verbrennungsanlage bringt.

Dort werden die Verpackungsbehälter entladen und direkt in den Verbrennungsofen eingegeben.

Der Verpackungsbehälter 14 kann, wenn durch das abzupackende Abfallmaterial bedingt, mit einer wasserdichten Auskleidung, z.B. einem Kunststoffsack versehen sein, der dann nach dem Befüllen des Behälters verschlossen wird.

Er kann bereits auf einer Palette zugeführt werden oder nach dem Füllen auf eine solche aufgesetzt werden, wobei ggf. die Palette zusammen mit dem oder mehreren auf ihr angeordneten Verpackungsbehältern in den Verbrennungsofen eingegeben wird.

## Patentansprüche

1. Mobile Vorrichtung zur Handhabung von Abfall für den Transport, mit einem Wagen (10), auf dem ein Einfülltrichter (12) für das Abfallmaterial angebracht ist und unter den Einfülltrichter (12) leere Verpackungsbehälter (14) zugeführt werden, mit einer Einrichtung (18) auf der Ladefläche des Wagens (10) für die Abfuhr der gefüllten Verpackungsbehälter und mit einer Einrichtung (20) zum Verschließen der gefüllten Verpackungsbehälter (14) auf dem Wagen (10), **dadurch gekennzeichnet**, daß eine Einrichtung (16) für die Zufuhr der leeren Verpackungsbehälter (14) auf dem Wagen (10) angebracht ist, die Einrichtungen (16, 18) für die Zufuhr und die Abfuhr der Verpackungsbehälter (14) von auf der Ladefläche des Wagens (10) angebrachten Rollenbahnen (16, 18) gebildet werden, und daß der Einfülltrichter (12) an seinem unteren Ende mit einer vertikal aus- und einfahrbaren Schürze (30) versehen ist, die vor dem Befüllen des jeweiligen Verpackungsbehälters (14) zum Schutz seiner Wände beim Abfüllen des Abfallmaterials zeitweilig in diesen eintaucht.

2. Vorrichtung nach Anspruch 1, **dadurch gekennzeichnet**, daß im oder oberhalb des Einfülltrichters (12) eine Zerkleinerungseinrichtung (26) für das Abfallmaterial eingebaut ist.

3. Vorrichtung nach Anspruch 1 oder 2, **dadurch gekennzeichnet**, daß der Einfülltrichter (12) im Bereich seines unteren Endes mit einer Einrichtung zum Einpressen des eingefüllten Abfallmaterials in den jeweiligen Verpackungsbehälter (14) versehen ist.

4. Vorrichtung nach Anspruch 3, **dadurch gekennzeichnet**, daß die Einrichtung zum Einpressen des eingefüllten Abfallmaterials aus einer Klappe (40) besteht, die um eine horizontale Achse schwenkbar und gegen das eingefüllte Abfallmaterial andrückbar ist.

5. Vorrichtung nach Anspruch 4, **dadurch gekennzeichnet**, daß die Klappe (40) durch einen Wandabschnitt des unteren Endes des Einfülltrichters (12) gebildet ist.

6. Verwendung der Vorrichtung nach einem der vorangehenden Ansprüche zur Handhabung von hochtoxischem Abfall für den Transport zu einer Verbrennungsanlage.

## Claims

1. Mobile apparatus for the handling of waste for transportation, with a truck (10) on which is mounted a funnel tube (12) for the waste material and in which empty packaging containers (14) are introduced underneath the funnel tube (12), with a device (18) on the loading surface of the truck (10) for the removal of the filled packaging containers and with a device (20) for closing the filled packaging containers (14) on the truck (10), **characterised in that** a device (16) for the introduction of empty packaging containers (14) is mounted on the truck (10), the devices (16,18) for the introduction and removal of the packaging containers (14) are formed from roller conveyors (16,18) mounted on the loading surface of the truck (10) and the funnel tube (12) is provided at its lower end with a vertically removable and insertable apron (30) which, prior to the filling of the packaging container in question (14), temporarily dips into the latter to protect its walls upon the filling of the waste material.

2. Apparatus according to claim 1, **characterised in that** a reducing device (26) for the waste material is incorporated in or above the funnel tube (12).

3. Apparatus according to claim 1 or 2, **characterised in that** the funnel tube (12) is provided in the region of its lower end with a device for pressing the introduced waste material into the packaging container in question (14).

4. Apparatus according to claim 3, **characterised in that** the device for pressing in the introduced waste material consists of a flap (40) which is pivotable about a horizontal axis and pressable against the introduced waste material.

5. Apparatus according to claim 4, **characterised in that** the flap (40) is formed by a section of wall of the lower end of the funnel tube (12).

6. Use of the apparatus according to one of the previous claims for the handling of highly toxic waste for transportation to an incineration plant.

## Revendications

1. Dispositif mobile pour la manipulation de déchets à transporter, comportant un véhicule (10) équipé d'un entonnoir de remplissage (12) de déchets sous lequel des récipients d'emballage vides (14) sont amenés, comprenant, sur la plate-forme de chargement du véhicule (10), un dispositif d'enlèvement (18) des récipients d'emballage (14) pleins et, sur le véhicule (10), un dispositif de fermeture (20) des récipients d'emballage (14) pleins, caractérisé en ce qu'un dispositif d'amenée de récipients d'emballage (14) vides est monté sur le véhicule, en ce que les dispositifs (16, 18) pour l'amenée et l'enlèvement des récipients d'emballage (14) sont constitués de transporteurs à galets montés sur la plate-forme de chargement du véhicule (10) et en ce que l'entonnoir de remplissage (12) est pourvu, à son extrémité inférieure, d'un tablier (30) pouvant être entré et sorti verticalement, qui, avant le remplissage de chaque récipient d'emballage (14), plonge temporairement dans celui-ci, pour protéger ses parois pendant son remplissage.

2. Dispositif suivant la revendication 1, caractérisé en ce que un dis positif de broyage de déchets (26) est installé dans ou au-dessus de l'entonnoir de remplissage (12).

3. Dispositif suivant la revendication 1 ou 2, caractérisé en ce que l'entonnoir de remplissage (12) est pourvu, dans la région de son extrémité inférieure, d'un dispositif de compression des déchets introduits dans le récipient d'emballage (14).

4. Dispositif suivant la revendication 3, caractérisé en ce que le dis positif de compression des déchets introduits est constitué d'un volet (40) qui peut pivoter autour d'un axe horizontal et qui est poussé contre les déchets introduits.

5. Dispositif suivant la revendication 4, caractérisé en ce que le volet (40) est constitué par une section de la paroi de l'extrémité inférieure de l'entonnoir de remplissage (12).

6. Utilisation du dispositif suivant l'une quelconque des revendica tions précédentes pour manipuler des déchets fortement toxiques à transporter vers une installation d'incinération.
